# EUROPÄISCHE PATENTANMELDUNG

(11) **EP 1 538 086 A1**
(43) Veröffentlichungstag der Anmeldung: **08.06.2005**
(21) Anmeldenummer: 04028519.9
(22) Anmeldetag: 02.12.2004
(51) Int. Cl.: B65B 61/02, B65B 9/20, B65B 51/30

(54) **Vorrichtung zum Herstellen einer Beutelkette**

(30) Priorität: 03.12.2003 DE 10356458
(71) Anmelder: Rovema Verpackungsmaschinen GmbH, 35463 Fernwald (DE)
(72) Erfinder: Braun, Harald, 35305 Grünberg (DE); Baur, Walter Dr, 63584 Gründau (DE)

(57) **Zusammenfassung**

Die Anmeldung betrifft eine Vorrichtung (47) zum Verschweißen einer umgeformten Folienbahn (2), um eine aus mindestens zwei Beuteln (15, 16) bestehende Beutelkette (17) herzustellen, wobei zwischen jeweils zwei Beuteln (15, 16) der Beutelkette (17) eine Perforation (18) vorgesehen wird, um diese Beutel (15, 16) manuell voneinander trennen zu können, bestehend aus einer Folienbahn (2) und zwei gegeneinander beweglichen, die Folienbahn (2) zwischen sich einklemmenden Backen (10, 11), wobei die erste Backe (11) ein mit Zähnen (19) versehenes Stechmesser (20) aufweist, um die Folienbahn (2) bei einer größeren Auslenkung des Stechmessers (20) vollständig durchtrennen zu können, und bei einer geringeren Auslenkung lediglich mit den Spitzen (21) der Zähne (19) in die Folienbahn (2) einstechen zu können, um eine Perforation (18) zu erzeugen.

Um die Vorrichtung (47) relativ unabhängig von einem einfachen Auslenkmechanismus des Stechmessers (20) zu machen und trotzdem eine genaue Auslenkung zu erreichen, wird vorgeschlagen, dass die zweite Backe (10) einen die Auslenkung des Stechmessers (20) begrenzenden Amboss (22) aufweist, und dass der Amboss (22) hinsichtlich seiner Position oder Ausrichtung in der zweiten Backe (10) zwischen zwei Stellungen (23, 24) verstellbar ist, um in der einen Stellung (23) die geringere Auslenkung und in der anderen Stellung (24) die größere Auslenkung zu begrenzen.

## Beschreibung

Gegenstand der Anmeldung ist eine Vorrichtung zum Verschweißen einer umgeformten Folienbahn, um eine aus mindestens zwei Beuteln bestehende Beutelkette herzustellen, wobei zwischen jeweils zwei Beuteln der Beutelkette eine Perforation vorgesehen wird, um diese Beutel später manuell voneinander trennen zu können.

Derartige Beutelketten sind hinlänglich bekannt. Am häufigsten werden Beutelketten aus zwei miteinander verbundenen Beuteln hergestellt. Dabei können die beiden Beutel ein gleiches oder ein unterschiedliches Produkt enthalten. In selteneren Fällen werden Beutelketten aus drei oder mehr zusammenhängenden Beuteln vertrieben. Ein Verbraucher kann einen Beutel entlang der Perforation von der Beutelkette abreißen, um nachfolgend die um Beutel enthaltene Produktportion zu verwenden.

Es sind vertikale Schlauchbeutelmaschinen bekann, mit denen Beutelketten hergestellt werden können. Bei einem derartigen Maschinentyp wird eine Folienbahn von einer Vorratsrolle abgezogen und zu einem vertikal ausgerichteten Folienschlauch umgeformt. Der Folienschlauch wird befüllt, sowie längs und quer verschweißt. An seiner Quersiegeleinrichtung sind zwei gegeneinander bewegliche, die umgeformte Folienbahn zwischen sich einklemmende Backen vorgesehen, wobei die erste Backe ein mit Zähnen versehenes Stechmesser aufweist, um die Folienbahn bei einer größeren Auslenkung des Stechmessers vollständig durchtrennen zu können, und bei einer geringeren Auslenkung lediglich mit den Spitzen der Zähne in die Folienbahn einstechen zu können, um eine Perforation zu erzeugen. Die zweite Backe weist einen genügend tiefen Schlitz auf, in welchen das Stechmesser eindringt. Durch eine abwechselnd geringere oder größere Auslenkung werden aus zwei befüllten Beuteln bestehende Beutelketten hergestellt.

Die bekannte Vorrichtung hat den Nachteil, dass die Stechmesserauslenkung sehr genau und minimiert sein muss, um ohne Zeitverlust zum einen eine genaue Perforation und zum anderen gerade so eine Foliendurchtrennung zu erreichen, was die Vorrichtung verteuert. Einfache und kostengünstige technische Mittel, die zwei relativ ungenaue Strecken der Stechmesserauslenkung vorgeben, können bei sehr schnell betriebenen vertikalen Schlauchbeutelmaschinen nicht eingesetzt werden.

Es liegt die Aufgabe zu Grunde, eine Vorrichtung gemäß dem Oberbegriff des Anspruchs 1 so weiterzubilden, dass das Stechmesser auch ungenau weit ausgelenkt werden kann, und trotzdem in zuverlässiger und schneller Weise Beutelketten mit einer Perforation zwischen jeweils zwei Beuteln hergestellt werden können.

Gelöst ist die Aufgabe gemäß dem kennzeichnenden Teil des Anspruchs 1. Danach weist die zweite Backe einen die Auslenkung des Stechmessers begrenzenden Amboss auf und der Amboss ist hinsichtlich seiner Position oder Ausrichtung in der zweiten Backe zwischen zwei Stellungen verstellbar, um in der einen Stellung die geringere Auslenkung und in der anderen Stellung die größere Auslenkung zu begrenzen.

Die vorgeschlagene Vorrichtung hat den Vorteil, dass das Stechmesser auch bei einem ungenauen Betrieb des Stechmessers sehr schnell und genau arbeitet, da der Amboss jeweils die exakte Stechmesserauslenkung begrenzt. So reicht es aus, dass das Stechmesser jeweils genügend weit ausgelenkt wird. Bei der Herstellung von aus zwei Beuteln bestehenden Beutelketten wird der Amboss abwechselnd in eine das Stechmesser früher stoppende und eine dieses später stoppende Position gesetzt. Dass Positionieren oder Ausrichten kann durch eine einfache, an der zweiten Backe befestigte, mit der zweiten Backe mitbewegte Stelleinrichtung geschehen. Oder ein mechanisches Koppelglied überträgt die Hin und Herbewegung der zweiten Backe auf einen Positionsumschalter für den Amboss. Wird das Stechmesser früher gestoppt, also nicht so weit ausgelenkt, so erfolgt lediglich eine Perforation der Beutelkette. Schlägt das Stechmesser oder ein mit diesem verbundenes Bauteil erst später, d. h. bei einer größeren Auslenkung gegen den Amboss, so erfolgt eine Abtrennung der Beutelkette vom Folienschlauch. Die Stellungen beziehen sich jeweils auf eine Sollauslenkung bei geschlossenen Backen, wenn eine Querverschweißung der Beutelkette erfolgt. Während bei einer Querverschweißung die äußeren Nähte zweier aufeinanderfolgender Beutelketten erzeugt werden, werden bei einer nachfolgenden Querverschweißung zwei Schweißnähte mit dazwischen angeordneter Perforation erzeugt, wobei diese beiden Schweißnähte zwischen den Beuteln der Beutelkette liegen.

Weitere, vorteilhafte Ausgestaltungen der vorgeschlagenen Vorrichtung sind in den Ansprüchen 2 bis 10 beschrieben.

Zwei die Auslenkung begrenzende Stellungen werden erreicht, wenn gemäß Anspruch 2 am Amboss eine Reihe von Erhebungen vorgesehen ist, wobei jeweils eine Erhebung einen mechanischen Widerstand für eine Spitze darstellt, zwischen jeweils zwei Erhebungen eine mit einer hinteren Begrenzung versehene Materialaussparung vorgesehen ist, und eine Stelleinrichtung dazu vorgesehen ist, den Amboss in eine Richtung quer zur Betätigungsrichtung des Stechmessers zu versetzen, um die Spitzen wahlweise gegen die Erhebungen oder gegen die hinteren Begrenzungen zu bewegen, und um damit wahlweise eine geringere oder eine größere Auslenkung vorzugeben.

Eine wahlweise Durchtrennung oder Perforierung des Folienschlauches wird auch erreicht, wenn eine Stelleinrichtung dazu vorgesehen ist, den Amboss in die zweite Backe hinein und in entgegengesetzte Richtung dazu wieder herauszustellen (Anspruch 3). Weist dabei der Amboss eine ebene und gerade Oberfläche zum Anstoßen der Spitzen der Zähne des Stechmessers auf (Anspruch 4), so kommt es je nach Position des Ambosses zu einem tieferen Eindringen des Stechmessers in die zweite Backe (Durchtrennung) oder nicht (Perforierung). Ist dagegen gemäß Anspruch 5 am Amboss eine Reihe von Erhebungen vorgesehen, wobei jeweils eine Erhebung einen mechanischen Widerstand für eine Spitze oder einen Spitzenzwischenraum darstellt, zwischen jeweils zwei Erhebungen eine mit einer hinteren Begrenzung versehene Materialaussparung vorgesehen, und die Stelleinrichtung dazu vorgesehen, den Amboss in diese Richtung zu versetzen, um die Spitzen stets gegen die Erhebungen oder stets gegen die hinteren Begrenzungen zu bewegen, so kann durch ein Versetzen des Ambosses in die zweite Backe hinein bzw. aus dieser heraus abwechselnd eine Durchtrennung und eine Perforierung erfolgen. Das Ergebnis ist das gleiche, egal ob die Spitzen der Zähne stets gegen die Erhebungen oder stets gegen die hinteren Begrenzungen bewegt werden.

Eine wahlweise Durchtrennung oder Perforierung kann auch durch einen drehbaren Amboss erreicht werden. In einer bevorzugten Ausführungsform ist dabei der Amboss um eine Achse drehbar in der zweiten Backe befestigt, hat der Amboss eine zylinderartige Form und an seinem Mantel mehrere Anstoßflächen für die Spitzen des Stechmessers, wobei jede Anstoßfläche einen anderen Radialabstand zur Achse hat, so dass bei einer Drehung des Ambosses wahlweise eine seiner Anstoßflächen in die Bewegungsrichtung des Stechmessers gesetzt werden kann (Anspruch 6). Je nachdem, wie tief die Anstoßfläche im Mantel vorgesehen ist, kommt es zu lediglich einer Perforation oder zu einer Durchtrennung der Folienbahn. Im Falle der Herstellung einer aus drei Beuteln bestehenden Beutelkette müsste der Amboss stets zweimal eine höher (radial weiter außen) gelegene Anstoßfläche darbieten, um zwei Perforationen zu erzeugen und nachfolgend um einen bestimmten Winkel gedreht werden, um eine tiefer liegende Anstoßfläche dem Stechmesser entgegenzusetzen, so dass eine Abtrennung der Beutelkette vom Folienschlauch erfolgt.

Weist bei einem Amboss, der eine Reihe von Erhebungen hat, die Erhebungen und die Spitzenzwischenräume jeweils eine Kontaktfläche für einen gegenseitigen Berührungskontakt auf (Anspruch 7), so wird das Stechmesser bei dem Berührungskontakt gestoppt, ohne dass die Spitzen geschädigt und somit stumpf werden können. Dabei können die Kontaktflächen gerade (Anspruch 8) oder gewölbt sein, je nachdem welche Messerausgestaltung vorteilhafter ist. Bestehen die Spitzen aus einem harten Material, insbesondere aus Hartmetall (Anspruch 10), so können auch die Spitzen gegen einen vom Amboss ausgebildeten Widerstand gefahren werden, ohne einen Schaden zu erleiden. Dabei ist auch zu berücksichtigen, dass das Stechmesser eine relativ kleine Masse hat, und das Abstoppen des Stechmessers am Amboss erst dann geschieht, wenn das Stechmesser infolge seines Eindringens in den Folienschlauch und seiner ohnehin schon fast erreichten Auslenkstrecke nur noch eine relativ geringe kinetische Energie hat.

Im folgenden wird die Erfindung an Hand von Ausführungsbeispiele darstellenden Figuren näher beschrieben. Es zeigt:
- Figur 1: in einer Seitenansicht eine vertikale Schlauchbeutelmaschine zur Herstellung von jeweils zwei Beuteln aufweisenden Beutelketten, an deren Quersiegeleinrichtung zwei gegeneinander bewegliche, einen Folienschlauch quer zu dessen Transportrichtung verschweißende Backen auch dazu vorgesehen sind, abwechselnd mit einem in der ersten Backe befindlichen Stechmesser eine Perforation und eine Durchtrennung des Folienschlauches auszuführen und die zweite Backe einen als Widerstand für das Stechmesser wirkenden Amboss aufweist;
- Figur 2: in einer Ansicht von vorne die Schweißfläche der zweiten Backe mit dem Amboss, wobei der Amboss eine Reihe von Erhebungen aufweist, zwischen jeweils zwei Erhebungen eine Materialaussparung vorgesehen ist, und der Amboss mittels einer Stelleinrichtung nach jedem Schweißvorgang zuerst um eine kleine Strecke quer zur Folientransportrichtung versetzt und dann wieder zurück gesetzt wird;
- Figur 3: in einem teilweisen Schnitt und in vergrößerter Darstellung die den Folienschlauch verschweißenden Backen der Figur 1;
- Figur 4: in einer Ansicht von oben das Stechmesser und den Amboss aus den Backen der Figur 3 unmittelbar vor dem Erzeugen einer Perforation;
- Figur 5: in einer Ansicht von oben den Gegenstand der Figur 4, jedoch direkt nach einem Durchstoßen des Folienschlauches und somit erzeugter Perforation, wobei die Spitzen des Stechmessers auf den Erhebungen des Ambosses anstoßen;
- Figur 6: in einer Ansicht von oben den Gegenstand der Figur 5, jedoch mit nach rechts versetztem Amboss, so dass die Spitzen in die Materialaussparungen gelangen, und das Stechmesser weiter ausgelenkt wurde, um den Folienschlauch vollständig zu durchtrennen;
- Figur 7: in einer Seitenansicht und in vergrößerter Darstellung die fertiggestellte Beutelkette aus Figur 1, mit einer Perforation in einer die beiden Beutel voneinander abgrenzenden Quernaht;
- Figur 8: in einem Querschnitt eine Backe mit einem in Bewegungsrichtung des Stechmessers verstellbarem Amboss;
- Figur 9: in einem Querschnitt eine Backe mit einem um eine Achse drehbaren Amboss, wobei der Amboss eine zylinderartige Form hat und drei unterschiedlich tief liegende Anstoßflächen an seinem Mantel aufweist;
- Figur 10: in einer Ansicht von oben und in einem Ausschnitt ein Stechmesser, dessen Zähne in Materialaussparungen eines Ambosses eingreifen, währenddessen Erhebungen des Ambosses gegen Spitzenzwischenräume des Stechmessers gelangen;
- Figur 11: in einer Ansicht von oben und in einem Ausschnitt einen Gegenstand analog Figur 10, jedoch mit gewölbten Spitzenzwischenräumen des Stechmessers, sowie
- Figur 12: in einer Seitenansicht eine aus drei Beuteln bestehende Beutelkette.

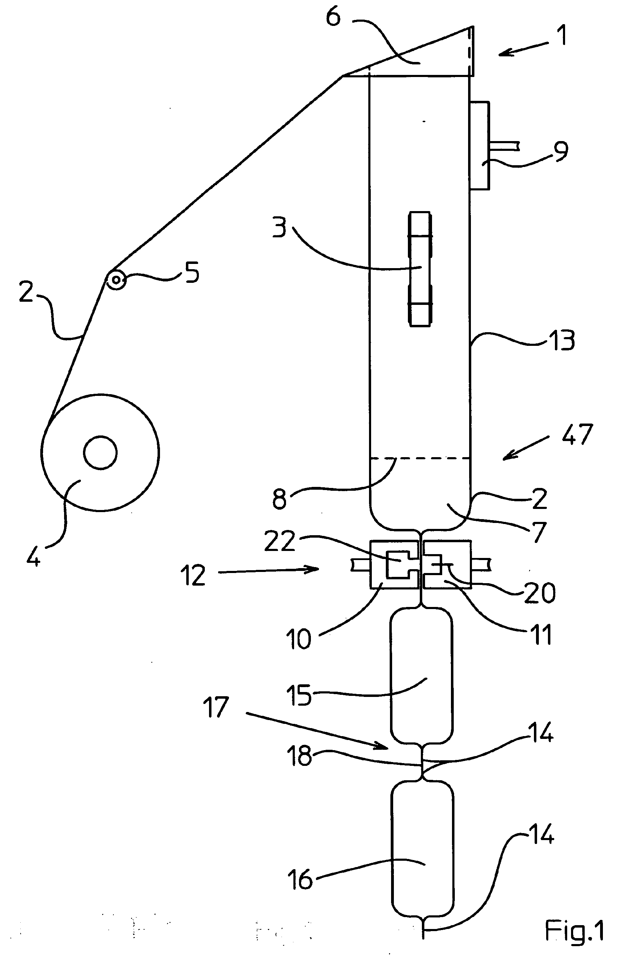

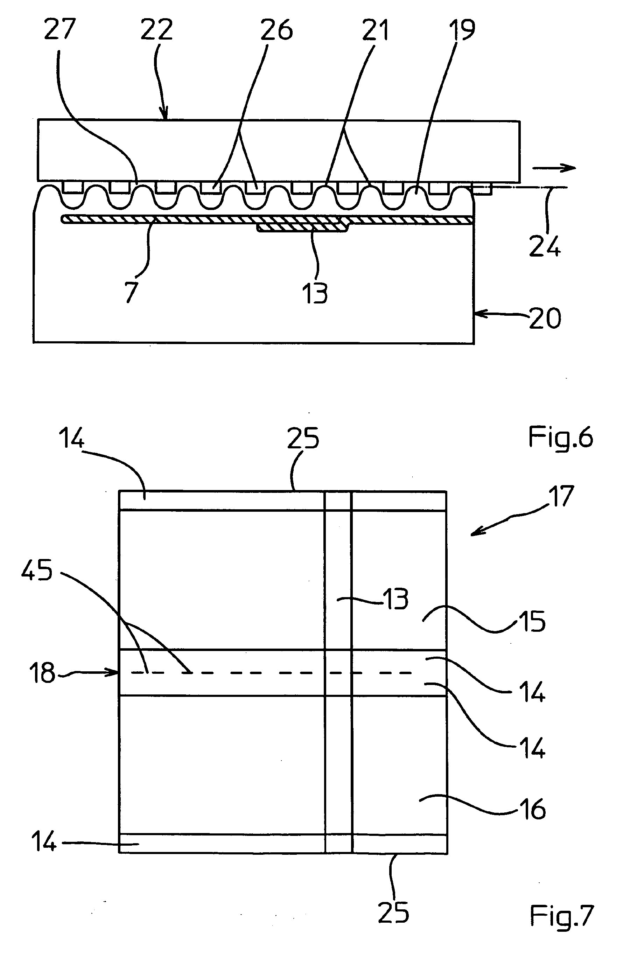

Bei einer vertikalen Schlauchbeutelmaschine 1 wird eine Folienbahn 2 mittels eines Folienabzuges 3 von einer Vorratsrolle 4 abgezogen und über eine Umlenkrolle 5 einer Formschulter 6 zugeführt (Figur 1). An der Formschulter 6 wird die Folienbahn 2 zu einem Folienschlauch 7 umgeformt. Der Folienschlauch 7 läuft über ein Formatrohr 8, durch welches eine Befüllung des unteren Endes des Folienschlauches 7 erfolgt. Der Folienschlauch 7 wird mittels einer Längssiegeleinrichtung 9 längs und mittels einer zwei Backen 10, 11 aufweisenden Quersiegeleinrichtung 12 quer verschweißt. Dabei entstehen eine Längsnaht 13 und Quernähte 14 am Folienschlauch 7 und den Beuteln 15, 16 einer erzeugten Beutelkette 17 (Figur 7).

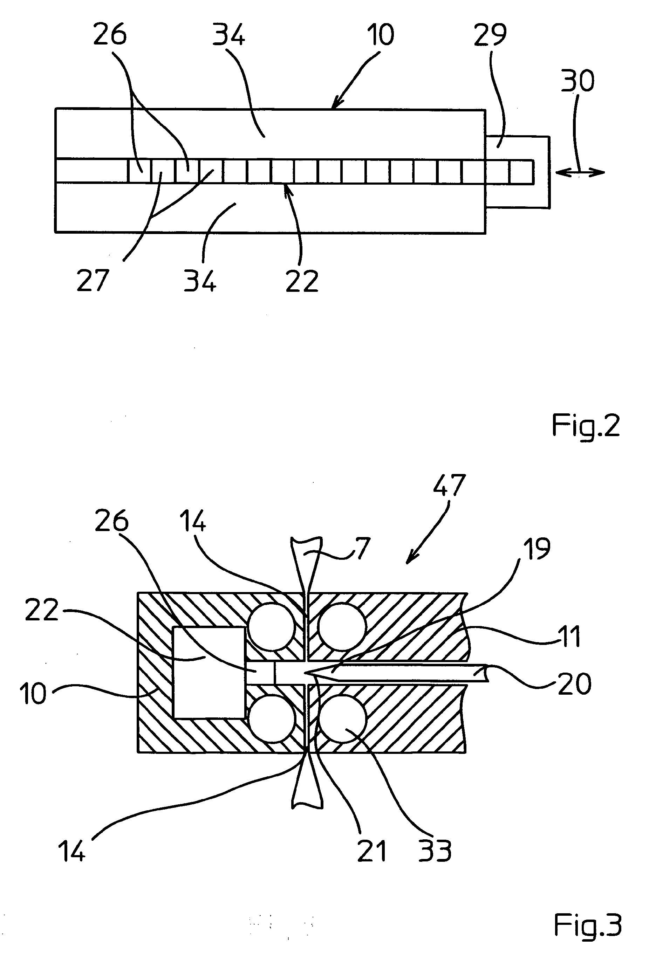

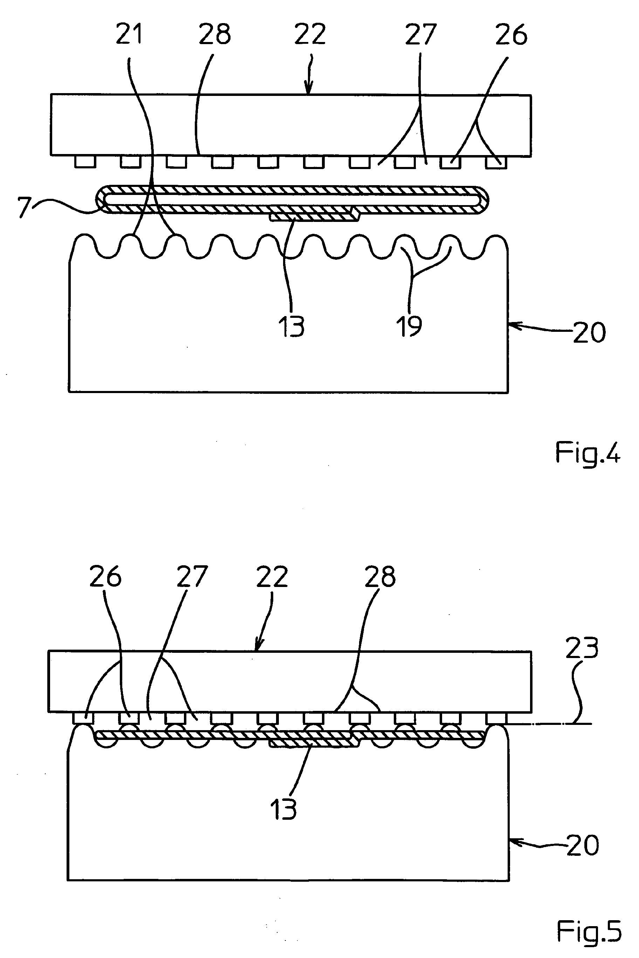

Als Vorrichtung 18 zum Verschweißen der umgeformten Folienbahn 2, um die aus zwei Beuteln 15, 16 bestehende Beutelkette 17 herzustellen, wobei zwischen den beiden Beuteln 15, 16 der Beutelkette 17 eine Perforation 18 vorgesehen wird, um diese Beutel 15, 16 manuell voneinander trennen zu können, dienen die Folienbahn 2 und die beiden gegeneinander beweglichen, die Folienbahn 2 zwischen sich einklemmenden Backen 10, 11. Die erste Backe 11 weist ein mit Zähnen 19 versehenes Stechmesser 20 auf (Figuren 3 bis 6), um die Folienbahn 2 bei einer größeren Auslenkung des Stechmessers 20 vollständig durchtrennen zu können (Figur 6), und bei einer geringeren Auslenkung (Figur 5) lediglich mit den Spitzen 21 der Zähne 19 in die Folienbahn 2 einstechen zu können, um die Perforation 18 zu erzeugen. Die zweite Backe 10 weist einen die Auslenkung des Stechmessers 20 begrenzenden Amboss 22 auf. Der Amboss 22 ist hinsichtlich seiner Position in der zweiten Backe 10 zwischen zwei Stellungen 23, 24 verstellbar, um in der einen
Stellung 23 die geringere Auslenkung (Figur 5) und in der anderen Stellung 24 die größere Auslenkung (Figur 6) zu begrenzen. Bei der geringeren Auslenkung (Figur 5) durchdringen nur die Spitzen 21 die Folienbahn 2 und es entsteht die Perforation 18. Bei der größeren Auslenkung (Figur 6) kommt es dagegen zu einer vollständigen Durchtrennung der Folienbahn 2 entlang von Abschnittslinien 25 (Figur 7) der Folienbahn 2.

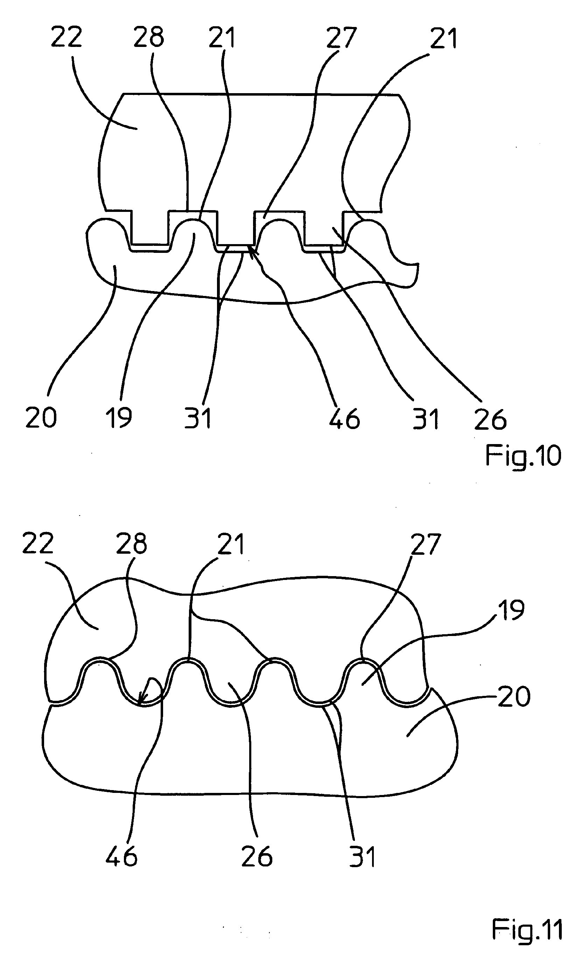

Um die beiden unterschiedlichen Auslenkungen des ansonsten relativ ungenau ausgelenkten Stechmessers 20 zu erreichen, ist am Amboss 22 eine Reihe von Erhebungen 26 vorgesehen, wobei jeweils eine Erhebung 26 einen mechanischen Widerstand für eine Spitze 21 darstellt, um eine Perforation 18 zu erzeugen. Zwischen jeweils zwei Erhebungen 26 ist eine mit einer hinteren Begrenzung 28 versehene Materialaussparung 27 vorgesehen. Eine Stelleinrichtung 29 ist dazu vorgesehen, den Amboss 22 etwas in eine Richtung 30 quer zur Betätigungsrichtung des Stechmessers 20 und wieder zurück zu versetzen, um die Spitzen 21 abwechselnd gegen die Erhebungen 26 oder gegen die hinteren Begrenzungen 28 zu bewegen und um derart abwechselnd eine Perforation 18 und eine Foliendurchtrennung mittels Erzeugung einer Abschnittslinie 25 zu erreichen. Beim Erzeugen der Abschnittslinie 25 stößt das Stechmesser 20 nicht zwangsläufig gegen den Amboss 22. Es kann dies jedoch tun. Um insbesondere die Spitzen 21 zu schonen, können die Spitzen 21 aus Hartmetall bestehen sowie die Erhebungen 26 und die Spitzenzwischenräume 46 jeweils eine Kontaktfläche 31 für einen gegenseitigen Berührungskontakt aufweisen. Diese Kontaktflächen 31 können gerade (Figur 10) oder gewölbt (Figur 11) sein.

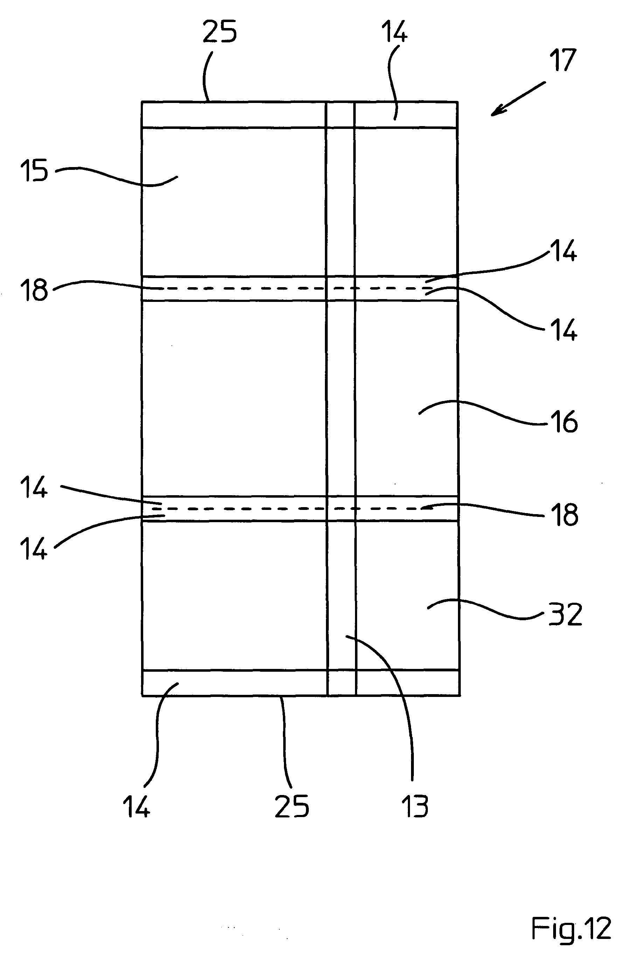

Erzeugt man nach jeder Abschnittslinie 25 zweimal jeweils eine Perforation 18, so entsteht eine Beutelkette 17 aus drei Beuteln 15, 16, 32 (Figur 12).

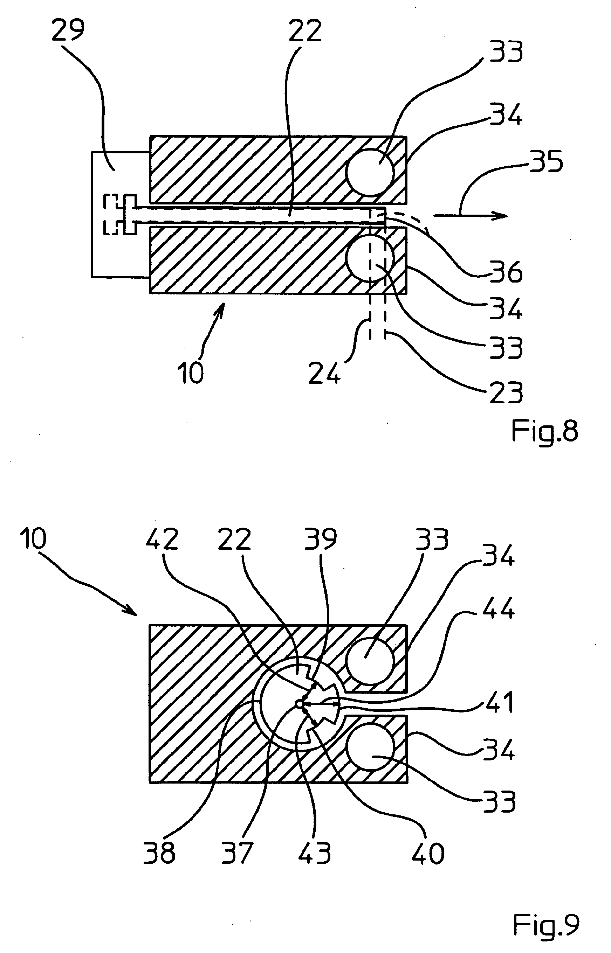

Beim Ausführungsbeispiel der Figur 8 ist eine Stelleinrichtung 29 dazu vorgesehen, den Amboss 22 in die zweite Backe 10 hinein und in entgegengesetzte Richtung 35 dazu wieder herauszustellen. Bei tiefer in der Backe 10 befindlichem Amboss 22 wird eine Abschnittslinie 25 erreicht. Bei nicht so tief liegendem Amboss 22 wird eine Perforation 18 erzeugt. Der Amboss 22 weist eine ebene und gerade Oberfläche 36 zum Anstoßen der Spitzen der Zähne des Stechmessers auf. Zwei Heizpatronenbohrungen 33 dienen zur Aufnahme von Heizpatronen, um die zum Verschweißen der Folienbahn 2 benötigte Wärme an die beiden Siegelflächen 34 der Backe 10 zu leiten.

Beim Ausführungsbeispiel der Figur 9 ist der Amboss 22 um eine Achse 37 drehbar in der zweiten Backe 10 befestigt. Der Amboss 22 hat eine zylinderartige Form. An seinem Mantel 38 sind mehrere Anstoßflächen 39, 40, 41 für die Spitzen 21 eines Stechmessers 22 vorgesehen. Jede Anstoßfläche 39, 40, 41 hat einen anderen Radialabstand 42, 43, 44 zur Achse 37. Somit kann bei einer Drehung des Ambosses 22 wahlweise eine seiner Anstoßflächen 39, 40, 41 in die Bewegungsrichtung des Stechmessers 22 mit konisch zulaufenden Spitzen gesetzt werden, um derart eine Abschnittslinie 25, eine ausgeprägte Perforation 18 mit langen Trennabschnitten 45 oder nur eine leichte Perforation mit kurzen Trennabschnitten 45 (Figur 7) zu erzeugen.
- 1: Schlauchbeutelmaschine
- 2: Folienbahn
- 3: Folienabzug
- 4: Vorratsrolle
- 5: Umlenkrolle
- 6: Formschulter
- 7: Folienschlauch
- 8: Formatrohr
- 9: Längssiegeleinrichtung
- 10, 11: Backe
- 12: Quersiegeleinrichtung
- 13: Längsnaht
- 14: Quernaht
- 15, 16: Beutel
- 17: Beutelkette
- 18: Perforation
- 19: Zahn
- 20: Stechmesser
- 21: Spitze
- 22: Amboss
- 23, 24: Stellung
- 25: Abschnittslinie
- 26: Erhebung
- 27: Materialaussparung
- 28: hintere Begrenzung
- 29: Stelleinrichtung
- 30: Richtung quer
- 31: Kontaktfläche
- 32: Beutel
- 33: Heizpatronenbohrung
- 34: Siegelfläche
- 35: Richtung
- 36: Oberfläche
- 37: Achse
- 38: Mantel
- 39, 40, 41: Anstoßfläche
- 42, 43, 44: Radialabstand
- 45: Trennabschnitt
- 46: Spitzenzwischenraum
- 47: Vorrichtung

## Patentansprüche

1. Vorrichtung (47) zum Verschweißen einer umgeformten Folienbahn (2), um eine aus mindestens zwei Beuteln (15, 16) bestehende Beutelkette (17) herzustellen, wobei zwischen jeweils zwei Beuteln (15, 16, 32) der Beutelkette (17) eine Perforation (18) vorgesehen wird, um diese Beutel (15, 16, 32) manuell voneinander trennen zu können, bestehend aus einer Folienbahn (2) und zwei gegeneinander beweglichen, die Folienbahn (2) zwischen sich einklemmenden Backen (10, 11), wobei die erste Backe (11) ein mit Zähnen (19) versehenes Stechmesser (20) aufweist, um die Folienbahn (2) bei einer größeren Auslenkung des Stechmessers (20) vollständig durchtrennen zu können, und bei einer geringeren Auslenkung lediglich mit den Spitzen (21) der Zähne (19) in die Folienbahn (2) einstechen zu können, um eine Perforation (18) zu erzeugen, **dadurch gekennzeichnet, dass** die zweite Backe (10) einen die Auslenkung des Stechmessers (20) begrenzenden Amboss (22) aufweist, und dass der Amboss (22) hinsichtlich seiner Position oder Ausrichtung in der zweiten Backe (10) zwischen zwei Stellungen (23, 24) verstellbar ist, um in der einen Stellung (23) die geringere Auslenkung und in der anderen Stellung (24) die größere Auslenkung zu begrenzen.

2. Vorrichtung nach Anspruch 1, **dadurch gekennzeichnet, dass** am Amboss (22) eine Reihe von Erhebungen (26) vorgesehen ist, wobei jeweils eine Erhebung (26) einen mechanischen Widerstand für eine Spitze (21) darstellt, dass zwischen jeweils zwei Erhebungen (26) eine mit einer hinteren Begrenzung (28) versehene Materialaussparung (27) vorgesehen ist, und dass eine Stelleinrichtung (29) dazu vorgesehen ist, den Amboss (22) in eine Richtung (30) quer zur Betätigungsrichtung des Stechmessers (20) zu versetzen, um die Spitzen (21) wahlweise gegen die Erhebungen (26) oder gegen die hinteren Begrenzungen (28) zu bewegen.

3. Vorrichtung nach Anspruch 1, **dadurch gekennzeichnet, dass** eine Stelleinrichtung (29) dazu vorgesehen ist, den Amboss (22) in die zweite Backe (10) hinein und in entgegengesetzte Richtung (35) dazu wieder herauszustellen.

4. Vorrichtung nach Anspruch 3, **dadurch gekennzeichnet, dass** der Amboss (22) eine ebene und gerade Oberfläche (36) zum Anstoßen der Spitzen (21) der Zähne (19) des Stechmessers (20) aufweist.

5. Vorrichtung nach Anspruch 3, **dadurch gekennzeichnet, dass** am Amboss eine Reihe von Erhebungen vorgesehen ist, wobei jeweils eine Erhebung einen mechanischen Widerstand für eine Spitze oder einen Spitzenzwischenraum darstellt, dass zwischen jeweils zwei Erhebungen eine mit einer hinteren Begrenzung versehene Materialaussparung vorgesehen ist, und dass die Stelleinrichtung dazu vorgesehen ist, den Amboss in diese Richtung zu versetzen, um die Spitzen stets gegen die Erhebungen oder stets gegen die hinteren Begrenzungen zu bewegen.

6. Vorrichtung nach Anspruch 1, **dadurch gekennzeichnet, dass** der Amboss (22) um eine Achse (37) drehbar in der zweiten Backe (10) befestigt ist, dass der Amboss (22) eine zylinderartige Form hat und an seinem Mantel (38) mehrere Anstoßflächen (39, 40, 41) für die Spitzen (21) des Stechmessers (20) aufweist, dass jede Anstoßfläche (39, 40, 41) einen anderen Radialabstand (42, 43, 44) zur Achse (37) hat, so dass bei einer Drehung des Ambosses (22) wahlweise eine seiner Anstoßflächen (39, 40, 41) in die Bewegungsrichtung des Stechmessers (20) gesetzt werden kann.

7. Vorrichtung nach Anspruch 2 oder Anspruch 5, **dadurch gekennzeichnet, dass** die Erhebungen (26) und die Spitzenzwischenräume (46) jeweils eine Kontaktfläche (31) für einen gegenseitigen Berührungskontakt aufweisen.

8. Vorrichtung nach Anspruch 7, **dadurch gekennzeichnet, dass** die Kontaktflächen (31) gerade und eben sind.

9. Vorrichtung nach Anspruch 7, **dadurch gekennzeichnet, dass** die Kontaktflächen (31 ) gewölbt sind.

10. Vorrichtung nach einem der Ansprüche 1 bis 9, **dadurch gekennzeichnet, dass** die Spitzen (31) aus einem harten Material, insbesondere aus Hartmetall bestehen.
